# EUROPEAN PATENT SPECIFICATION

(11) **EP 2 735 421 B1**
(45) Date of publication and mention of the grant of the patent: **28.12.2016**
(21) Application number: 13153519.7
(22) Date of filing: 31.01.2013
(51) Int. Cl.: B29C 45/42

(54) **APPARATUS FOR REMOVING RESIN MOLDED PRODUCT AND METHOD FOR REMOVING RESIN MOLDED PRODUCT**
VORRICHTUNG ZUR ENTNAHME EINES HARZGEFORMTEN PRODUKTS UND VERFAHREN ZUR ENTNAHME EINES HARZGEFORMTEN PRODUKTS
APPAREIL DE DEMOULAGE UN PRODUIT MOULÉ EN RÉSINE ET PROCÉDÉ DE DEMOULAGE DE PRODUIT MOULÉ EN RÉSINE

(30) Priority: 26.11.2012 JP 2012257008
(43) Date of publication of application: 28.05.2014
(73) Proprietor: Star Seiki Co., Ltd., Mizuho-ku Nagoya-shi Aichi (JP)
(72) Inventor: Ishibashi, Shoji, Niwa-gun, Aichi (JP)
(74) Representative: Hofstetter, Schurack & Partner

(56) References cited:
- EP-A1- 1 008 433
- JP-A- H0 435 911
- JP-A- H01 152 025
- JP-A- 2000 351 138
- JP-A- 2001 047 442
- JP-A- 2007 136 975
- JP-A- 2012 240 290
- US-A- 5 000 654

## Description

### FIELD

The present invention relates to an apparatus for removing resin molded product and a method for removing resin molded product, which is molded from a resin molding machine, and more specifically to an apparatus for removing resin molded product and a method for removing resin molded product, which is taken out from a metal mold, toward an injection unit side of a resin molding machine.

### BACKGROUND

For example, an apparatus for removing resin molded product disclosed in Patent Document 1 (Japanese Laid-open Patent Publication No. 2007-136975) is comprised by attaching a front-back frame that extends in a front-back direction to a left-right running body that is so supported as to move back and forth in a left-right direction on a body frame which extends to an operation side or anti-operation side of a resin molding machine in a direction perpendicular to a central axis line of the resin molding machine on a fixed-side platen of the resin molding machine (Hereinafter, the central axis-line direction is referred to as front-back direction, and a direction perpendicular to the central axis line as left-right direction) ; and providing a holding member that holds a resin molded product in a lower portion of an up-down arm which supports a front-back running body that moves back and forth in the front-back direction on the front-back frame, and which moves up and down so as to have an axis line in an up-down direction with respect to the running body.

The apparatus for removing resin molded product is designed to carry out a removing operation by moving the left-right running body and the front-back running body in corresponding directions; moving the holding member to above a space between metal molds that are opened; then lowering the up-down arm, and holding a resin molded product as a push-out operation of the resin molding machine is carried out or as the front-back body moves; then lifting the up-down arm to allow the resin molded product to come off from between the metal molds; and then moving the left-right running body, and moving the holding member to a release position that is provided on the operation side or anti-operation side of the resin molding machine.

When the resin molded product is taken out toward the operation side or anti-operation side of the resin molding machine, one end portion of the body frame protrudes toward the operation side or anti-operation side of the resin molding machine. The problem is that an operator's work area between the resin molding machines becomes narrower, lowering work efficiency.

Moreover, the resin molded product, which is taken out from the metal molds, maintains a posture of being taken out from the metal molds with respect to the release position, or a posture in which a longer direction thereof is facing the left-right direction, as the resin molded product moves out of the resin molding machine. Therefore, the protruding width of the body frame needs to be longer at the release position side. Therefore, the problem arises that the work space between the resin molding machines becomes narrower, lowering work efficiency.

To solve the problem, for example, an apparatus for removing resin molded product disclosed in Patent Document 2 (Japanese Laid-open Patent Publication No. 2005-47205) is comprised by attaching a front-back frame, which extends to a metal-mold position of a resin molding machine and to an injection unit side or movable side of the resin molding machine, to a fixed platen of the resin molding machine; and allowing a front-back running body, which is so provided as to move up and down an up-down arm with a holding member attached to a lower portion thereof, to move back and forth in a front-back direction on the front-back frame.

However, the release position of a resin molded product is limited to the movable side of the resin molding machine. As a result, the problem is that removing work efficiency is poor. Moreover, in the apparatus for removing resin molded product, the front-back frame is positioned above a tie-bar of the resin molding machine. Therefore, at the time of replacement of metal molds or the like, the front-back frame becomes an obstacle for metal-mold replacement work. The problem is that metal molds cannot be replaced for a short period of time.

As for the above apparatus for removing resin molded product, the front-back traveling distance leading up to the release position is long. Therefore, the apparatus for removing resin molded product is time-consuming. The problem is that a resin molded product removing cycle cannot be shortened.

Incidentally, if the resin molded product is removed toward the injection unit side, the resin molded product held by the holding member needs to go up high enough not to interfere with a resin pellet feed hopper of the injection unit. The problem is that the total height of the apparatus increases, making the apparatus larger in size.

Another problem is that, if an elongated resin molded product held by the holding member maintains a posture of being taken out from metal molds when moving to the injection unit side, a portion of the resin molded product collides with the resin pellet feed hopper, causing a removing failure.

A problem to be solved is that, in the apparatus for removing resin molded product of a type that remove a resin molded product toward an operation side or anti-operation side of a resin molding machine, an operator's work area becomes narrower, lowering work efficiency.

Another problem is that, if a resin molded product held by the holding member maintains a posture of being taken out from metal molds when moving to the release position, a portion of the resin molded product collides with a portion of the resin molding machine, possibly causing a removing failure. Still another problem is that the front-back frame that is positioned above the tie-bar of the resin molding machine becomes an obstacle for replacement work of metal molds and other parts. EP1008433 discloses an apparatus for taking out an injection-molded product, the apparatus being capable of taking out a injection-molded product from a mold in an open state while being held by a product holder and releasing it at a releasing position, the apparatus comprising:
clamping direction driving means for moving a product holder in a clamping direction; and ingress direction driving means for moving the product holder in a direction at a right angle to the clamping direction such that the clamping direction driving means is operated during the operation of the ingress direction driving means and after stoppage thereof, whereby the product holder is moved along a locus starting from a waiting position via an initial linear zone, a curve zone and a final linear zone to a holding position for holding the product.

### SUMMARY

The present invention is able to prevent the narrowing of the operator's work area between the resin molding machines, as well as to avoid the worsening of work efficiency. It is also possible to prevent the resin molded product from colliding with a portion of the resin molding machine when the holding unit holding the resin molded product is moved to the release position, thereby avoiding a removing failure. Furthermore, because the front-back frame retreats from above the tie-bar of the resin molding machine, metal molds and the like can be replaced efficiently.

The current invention provides an apparatus for removing resin molded product as well as a method for removing resin molded product defined by the independent claims 1 and 3. Further preferred embodiments are defined by the dependent claims 2 and 4.

### BRIEF DESCRIPTION OF THE DRAWINGS

FIG. 1 is an overall perspective view of the apparatus for removing resin molded product placed in a resin molding machine;
FIG. 2 is an explanatory front view of the apparatus for removing resin molded product;
FIG. 3 is an explanatory top view of the apparatus for removing resin molded product;
FIG. 4 is a schematic, explanatory front view showing a situation where a holding unit faces a metal mold;
FIG. 5 is an explanatory diagram showing a posture revolving state of a holding unit at a time when the holding unit is moved to an anti-operation side of the resin molding machine;
FIG. 6 is an explanatory diagram showing a situation where a holding unit is moved to the release position at an injection unit side; and
FIG. 7 is an explanatory back view of what is shown in FIG. 6 when seen from a back side.

### DETAILED DESCRIPTION

The most preferred embodiment is as follows: A first running body is moved to an operation side or anti-operation side of a resin molding machine with respect to a first frame, a second frame is moved to a metal mold-side forward position with respect to the first running body, a second running body is moved toward metal molds with respect to the second frame, an up-down frame is lowered so that a holding unit faces the metal molds opened and holds a resin molded product, the up-down frame is lifted up to separate the holding unit holding the resin molded product from between the metal molds opened before the second frame is moved to a retreat position with respect to the first running body, the first running body is moved to a side opposite to the side of the resin molding machine with respect to the first frame, a revolving member is activated at the position to control a posture of the holding unit, the second running body is moved to an injection unit side with respect to the second frame, and the holding unit is positioned at a release position near a side of the injection unit where the holding of the resin molded product is canceled, and the resin molded product is removed.

### Example 1

Hereinafter, the present invention will be described with reference to the accompanying drawings that illustrate examples.

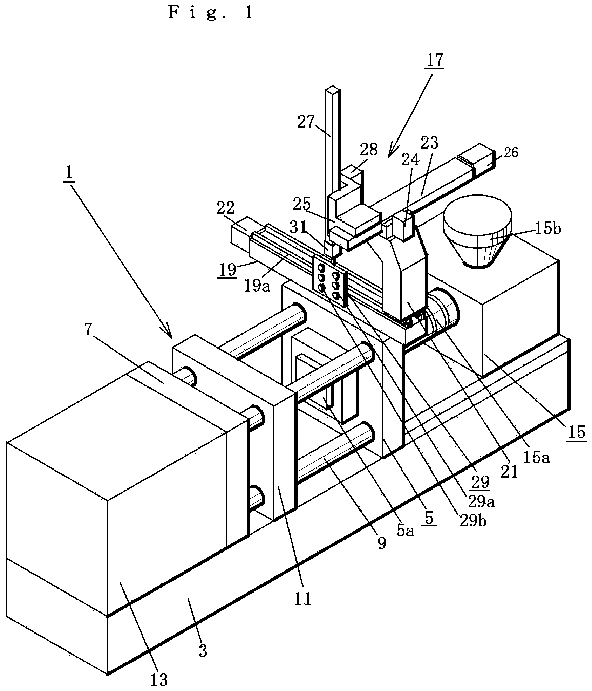

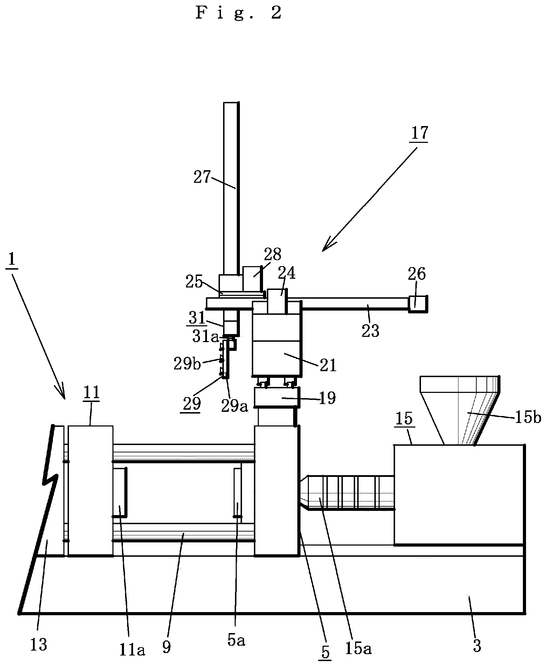

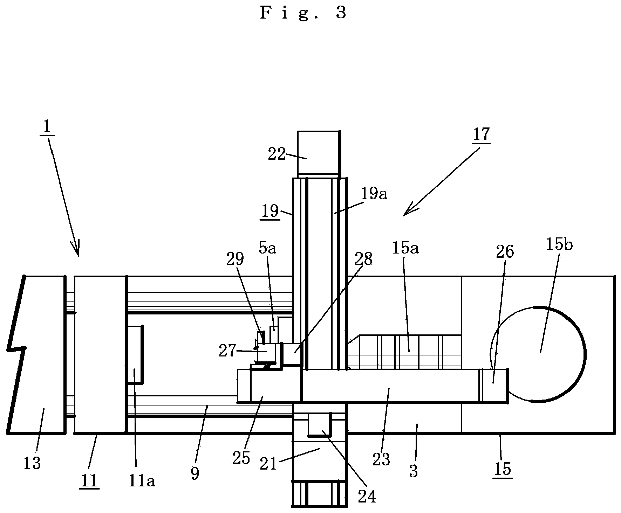

As shown in FIGS. 1 to 3, on a main body 3 of a resin molding machine 1, a fixed-side platen 5 and a movable-side platen 7 are so provided so as to face each other with a predetermined distance therebetween in a central axis-line direction. From the fixed-side platen 5 to the movable-side platen 7, tie-bars 9, which have an axis line in the central axis-line direction, extend horizontally.

To the fixed-side platen 5, a fixed metal mold 5a is fixed. The tie-bars 9 pivotally support a movable-side mounting platen 11 in such a way as to allow the movable-side mounting platen 11 to slide in the central axis-line direction. To the movable-side mounting platen 11, a movable metal mold 11a is fixed in such a way as to face the fixed metal mold 5a. To the movable-side mounting platen 11, a mold clamp unit 13 is joined: the mold clamp unit 13 includes an oil hydraulic cylinder, an electric motor, a screw, and the like, which are provided on the main body 3.

On the fixed-side platen 5's side of the main body 3, the following are provided: an injection cylinder 15a; and an injection unit 15, which includes a raw-material hopper 15b that is designed to supply resin materials into the injection cylinder 15a.

To an upper surface of the fixed-side platen 5, a first frame 19 of an apparatus for removing resin molded product 17 is fixed. The first frame 19 extends in the left-right direction, and is long enough that end portions thereof each reach an operation side and anti-operation side of the resin molding machine 1. To the first frame 19, a rail 19a, which extends in the left-right direction, is fixed. To the rail 19a, a first running body 21 is so supported as to be able to move in the left-right direction.

As a first driving unit that is designed to move the first running body 21 in the left-right direction with respect to the first frame 19, a belt driving mechanism is employed: the belt driving mechanism is, for example, designed to move the first running body 21 in the left-right direction by placing a toothed belt (not shown), part of which is fixed to the first running body 21, around rotating bodies such as toothed pulleys that are pivotally supported by the left-right direction end portions of the first frame 19 so as to be able to rotate, connecting, to one of the rotating bodies, a first electric motor 22 such as a numerically-controlled servo motor, and moving the toothed belt as the first electric motor 22 is driven.

As the first driving unit, a rack and pinion driving mechanism may be employed: the rack and pinion driving mechanism is designed to move the first running body 21 in the left-right direction by fixing a rack gear or toothed belt (not shown), which extends in the left-right direction, to the first frame 19, providing a first electric motor 22 on a first running body 21, engaging a pinion gear (not shown) fixed to an output shaft with the rack gear, and driving the first electric motor 22.

As the first driving unit, a feed screw driving mechanism, a linear driving mechanism, or the like may be used: the mechanism is designed to move the first running body in the left-right direction by connecting a first electric motor 22 to a feed screw (not shown), whose two ends are pivotally supported by the first frame 19 so as to have an axis line in the left-right direction and be able to rotate and which engages with a nut member (not shown) of the first running body 21, and using the feed screw that rotates as the first electric motor 22 is driven.

To the first running body 21, a second frame 23 is so supported as to be able to move in a front-back direction: the second frame 23 extends in the front-back direction that is the same as the direction of the central axis line, and is long enough to reach the movable metal mold 11a opened. The second frame 23 is moved by a second driving unit in the front-back direction. As in the case of the first driving unit, the second driving unit may be a rack and pinion driving mechanism, a belt driving mechanism, a feed screw driving mechanism, a linear driving mechanism, or the like. Reference numeral 24 represents a second electric motor, which is among the components of the second driving unit.

On the second frame 23, a second running body 25 is so supported as to be able to move in the front-back direction. The second running body 25 is moved by a third driving unit, which is joined to the second running body 25, in the front-back direction in synchronization with the front-back direction movement of the second frame 23 with respect to the first running body 21.

As in the case of the first and second driving units, the third driving unit may be a belt driving mechanism, a rack and pinion driving mechanism, a feed screw driving mechanism, or the like. Reference numeral 26 represents a third electric motor, which is among the components of the third driving unit.

On the second running body 25, an up-down frame 27 is so supported as to have an axis line in an up-down direction and move up and down. A fourth driving unit, which is joined to the up-down frame 27, moves the up-down frame 27 up and down.

As in the case of the first to third driving units, the fourth driving unit may be a belt driving mechanism, a rack and pinion driving mechanism, a feed screw driving mechanism, or the like. Reference numeral 28 represents a fourth electric motor, which is among the components of the fourth driving unit.

To a lower portion of the up-down frame 27, a chuck 29 is attached via a horizontally revolving member 31: the chuck 29 serves as a holding unit to hold a resin molded product molded by the resin molding machine 1, and the horizontally revolving member 31 serves as a posture revolving unit. The chuck 29 includes a chuck plate 29a. On a surface of the chuck plate 29a that faces the movable metal mold 11a, holding members 29b, including the following, are provided: suction pads, the number of which depends on the size or weight of a resin molded product to be held; or a plurality of pairs of grips.

The horizontally revolving member 31 includes an air motor or electric motor, a link arm that is joined to a revolving shaft 31a, a back-and-forth movement member, and the like. When the chuck 29 is moved to a removing position between the metal molds opened, the horizontally revolving member 31 revolves the chuck 29 joined to the revolving shaft 31a in such a way that a holding surface faces the left-right direction. When the chuck 29 is moved to a release position, the horizontally revolving member 31 revolves the chuck plate 29a in such a way that the holding surface faces the front-back direction.

Incidentally, the first running body 21 needs to be set to be high enough that the chuck 29 gets over the first frame 19 at a time when the up-down frame 27 moves upwards.

For example, in order to reduce the up-down direction length of the up-down frame 27, as disclosed in Japanese Laid-open Patent Publication No. 2003-127145 and Japanese Laid-open Patent Publication No. 2007-60763, the up-down frame 27 is made up of a first up-down frame, whose length is one-half of an elevating stroke and which is supported by the second running body 25 so as to be able to move up and down, and a second up-down frame, which is so supported as to move up and down relative to the first up-down frame. On an upper and a lower end portion of the first up-down frame, rotating bodies are pivotally supported so as to be able to rotate. A portion of one of the rotating bodies is fixed to the second running body. On a portion of the other rotating body, a belt that is fixed to the second up-down frame is placed. When the first up-down frame moves up and down relative to the second running body 25, the second up-down frame moves up and down relative to the first up-down frame that moves up and down as the belt runs. In this manner, a double speed mechanism may be realized in which the distance that the chuck 29 attached to a lower portion of the second up-down frame moves up and down is twice as long as the up-down length of the first and second up-down frames, and the speed at which the chuck 29 moves up and down is twice as fast.

Furthermore, in the present example, the front side of the resin molding machine 1 shown in the diagrams is regarded as the operation side. When the first running body 21 moves to the operation side of the resin molding machine 1 relative to the first frame 19, the chuck 29 is so set as to be at a central line of the resin molding machine 1.

The following describes an operation and a method of removing a resin molded product with the use of the apparatus for removing resin molded product 17 having the above configuration.

First, at a time when a resin molded product is molded by the resin molding machine 1, for example, the first electric motor 22 is driven to move the first running body 21 to the operation side of the first frame 19. Moreover, the second electric motor 24 is driven in such a way that the second frame 23 moves and protrudes toward the metal molds.

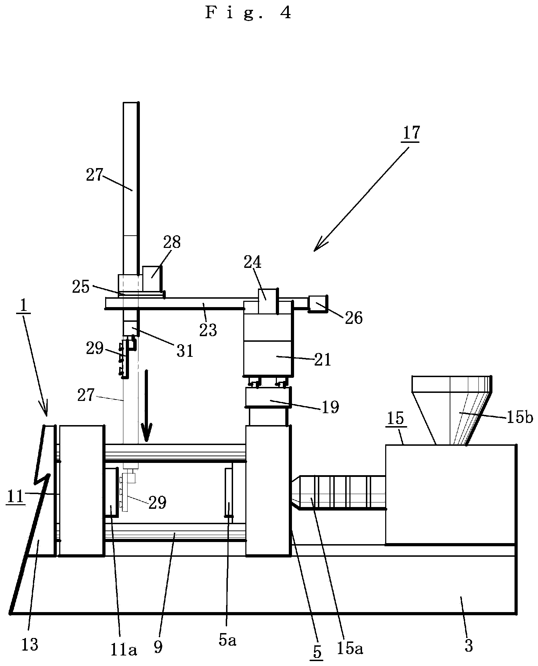

The third electric motor 26 is driven to move the second running body 25 toward a tip of the second frame 23. Moreover, the fourth electric motor 28 is driven to move the up-down frame 27 to an upper position. As a result, the chuck 29 is positioned above a central line of the fixed-side platen 5's side of the resin molding machine 1 to stand by (See portions indicated by solid line in FIG. 4).

In the above state, from a control unit (not shown) of the resin molding machine 1, a mold-open completion signal is input into a control unit (not shown) of the apparatus for removing resin molded product 17 as the movable metal mold 11a is separated from the fixed metal mold 5a after a resin molding operation comes to an end. In response, the fourth electric motor 28 is driven to lower the up-down frame 27. As a result, the holding surface of the chuck 29 faces a mold matching surface of the movable metal mold 11a opened (See portions indicated by dashed line in FIG. 4).

In the above state, the second electric motor 24 is driven to move the second frame 23 forward toward the movable metal mold 11a. As a result, the holding surface of the chuck 29 approaches the mold matching surface of the movable metal mold 11a. After that, a push-out mechanism (not shown) of the resin molding machine 1 works to push out a resin molded product 37 in the movable metal mold 11a toward the chuck 29. As a result, the resin molded product 37 is held by the holding members 29b.

After the taking out operation, the fourth electric motor 28 is reversely driven to move the up-down frame 27 upwards. As a result, the chuck 29 holding the resin molded product goes up high enough that the chuck 29 holding the resin molded product can get over the first frame 19 from between the metal molds 5a and 11a opened.

Incidentally, if the resin molded product that is taken out from the movable metal mold 11a is thick, the resin molded product cannot be completely taken out from inside the movable metal mold 11a only by the push-out operation of the resin molding machine 1. In such a case, after the chuck 29 holds the resin molded product with the help of the push-out operation, the second electric motor 24 may be driven and controlled in such a way that the second frame 23 retreats with a stroke that completely extracts the resin molded product from inside the movable metal mold 11a; or the third electric motor 26 may be driven and controlled in such a way that the second running body 25 retreats with a stroke that completely extracts the resin molded product from inside the movable metal mold 11a. Then, the fourth electric motor 28 is reversely driven to move the up-down frame 27 upwards.

After the operation, or at a time slightly after the start of the upward movement of the up-down frame 27, the second electric motor 24 is driven to move the second frame 23 to a retreat position on the injection unit 15's side with respect to the first running body 21. Then, the first electric motor 22 is driven to move the first running body 21 from the resin molding machine's operation side of the first frame 19 to the anti-operation side. At this time, the holding surface of the chuck 29 runs parallel to a traveling direction. Therefore, it is possible to mitigate air resistance against the resin molded product held by the chuck 29 during the movement to the anti-operation side, thereby suppressing the occurrence of vibration. Thus, it is possible to prevent a holding failure, such as falling of a resin molded product at a time when the resin molded product is moving.

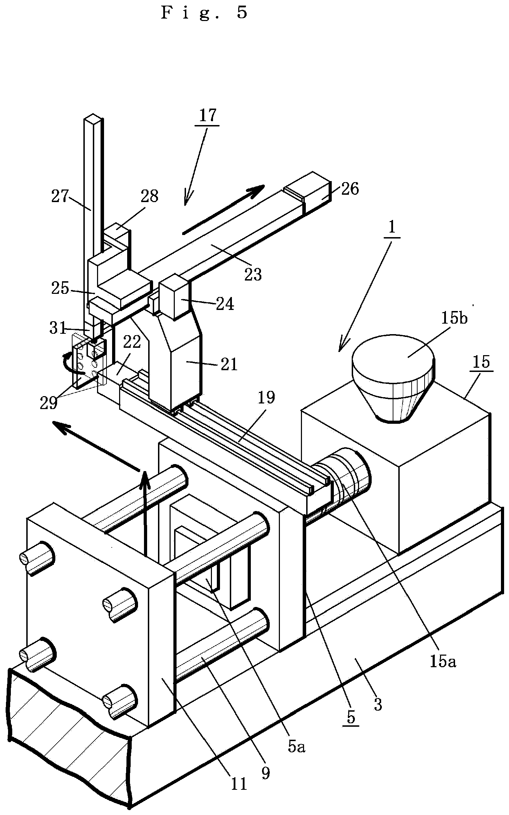

At a time when the first running body 21 moves to the anti-operation side of the first frame 19, the horizontally revolving member 31 is activated to revolve and control the posture of the chuck 29 in such a way that the holding surface thereof becomes parallel to the axis line of the resin molding machine 1 and faces outwards (See FIG. 5).

Incidentally, FIG. 5 shows a situation where the second frame 23 has moved to the retreat position at the injection unit 15's side with respect to the first running body 21 that has moved to the anti-operation side. However, the second frame 23 may remain at a forward position relative to the first running body 21 when the first running body 21 is moving to the anti-operation side of the resin molding machine 1.

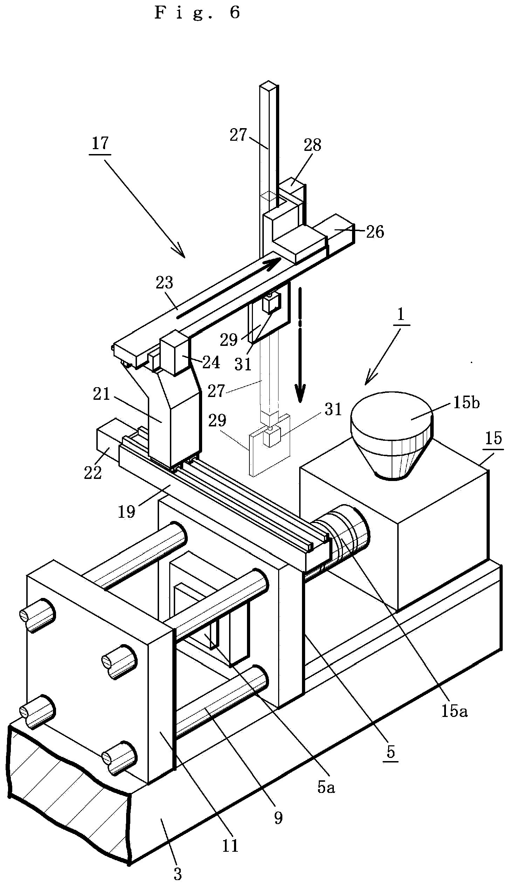

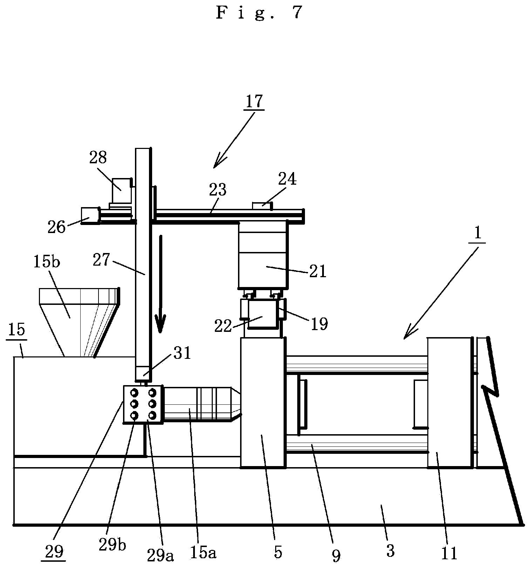

After the process of controlling the posture of the chuck 29, or at a time that coincides with the operation, the third electric motor 26 is driven to move the second running body 25 to a base end side of the second frame 23 with respect to the second frame 23. Then, the chuck 29 holding the resin molded product is positioned near a side of the injection unit 15 at the anti-operation side (See FIGS. 6 and 7).

At this time, the posture of the holding surface of the chuck 29 is so controlled that the holding surface runs parallel to the traveling direction. Therefore, it is possible to mitigate air resistance caused by the movement of the chuck 29, thereby suppressing the occurrence of vibration. Thus, it is possible to prevent a holding failure of a resin molded product at a time when the resin molded product is moving.

After the operation, the fourth electric motor 28 is driven in such a way that the up-down frame 27 moves down a distance that enables the chuck 29 holding the resin molded product to reach a release position of the molded product, which is preset near the side of the injection unit 15 at the anti-operation side of the resin molding machine 1. Then, at the position, the holding of the resin molded product is canceled. In this manner, the removing operation is completed.

Incidentally, according to the above description, with respect to the second frame 23 that has moved to the retreat position, the second running body 25 is moved to an end portion closer to the injection unit 15, and is positioned at the release position. However, with respect to the second frame 23, the second running body 25 may be selectively moved to a plurality of release positions, which are set near the side of the injection unit 15, before the resin molded product is released.

In the present example, after the chuck 29 is moved to the operation side of the resin molding machine 1, and the resin molded product is taken out, the chuck 29 holding the resin molded product is moved to the anti-operation side of the resin molding machine 1 and the side of the injection unit 15 to release. Therefore, the release position can be set within a wide area, making the removing operation more efficient.

When the chuck 29 is moved to the anti-operation side, and when the second frame 23 is moved to the retreat position, the posture of the holding surface of the chuck 29 is so controlled that the holding surface runs parallel to the traveling direction. Therefore, it is possible to mitigate air resistance against the resin molded product held, thereby suppressing the occurrence of vibration. Thus, it is possible to prevent a removing failure, such as falling of a resin molded product at a time when the resin molded product is moving.

Furthermore, the posture of the chuck 29 holding the resin molded product is controlled by the horizontally revolving member 31, which is activated to revolve, when the chuck 29 moves to the anti-operation side of the first frame 19, in such a way that the holding surface of the chuck 29 becomes parallel to the axis line of the resin molding machine 1 and faces outwards. Therefore, when the chuck 29 moves to the release position near the side of the injection unit 15, it is possible to prevent the resin molded product held from colliding with the raw-material hopper 15b.

Furthermore, when the chuck 29 holding the resin molded product is moved to the anti-operation side of the first frame 19, the second frame 23 is moved to the retreat position where the second frame 23 does not interfere with the raw-material hopper 15b. Therefore, the first running body 21 and the second frame 23 are simultaneously moved, shortening the removing cycle.

According to the above description, the removing operation is performed at the operation side of the resin molding machine 1, and the release operation is performed near the side of the injection unit 15 at the anti-operation side. However, the removing operation may be performed at the anti-operation side of the resin molding machine 1, and the release operation may be performed near a side of the injection unit 15 at the operation side.

According to the above description, when the chuck 29 moves to the anti-operation side of the first frame 19, the horizontally revolving member 31 is activated to control the posture of the chuck 29 in such a way that the chuck 29 revolves horizontally. However, the posture may be controlled by a posture revolving unit in such a way that the holding surface of the chuck 29 is reversely revolved to face downward.

According to the above description, the second frame 23 is moved as the second electric motor 24 is driven and controlled, and the second running body 25 is moved as the third electric motor 26 is driven and controlled. However, the second frame 23 and the second running body 25 may be moved as the second electric motor 24 is synchronously driven.

## Claims

1. An apparatus (17) for removing resin molded product, comprising:
a first frame (19) which is perpendicular to a central axis line of a resin molding machine (1), which is long enough that end portions each reach an operation side and anti-operation side of the resin molding machine (1), and which is fixed onto a fixed platen (5) ;
a first running body (21) which is so supported as to move on the first frame (19) in a direction perpendicular to the central axis line;
a first driving unit (22) which moves the first running body (21) back and forth in a direction perpendicular to the central axis line with respect to the first frame (19), whereby the first driving unit (22) is designed to move the first running body (21) to the operation side or anti-operation side of the resin molding machine (1) with respect to the first frame (19), and to move the first running body (21) to a side opposite to the side of the resin molding machine (1) with respect to the first frame (19),
a second frame (23) which is so supported above the first frame (19) as to extend in the same direction as the central axis line with respect to the first running body (21) and move in the direction;
a second driving unit (24) which moves the second frame (23) back and forth in the same direction as the central axis line with respect to the first running body (21) whereby the second driving unit (24) is designed to move the second frame (23) to a metal mold-side forward position with respect to the first running body (21),
a second running body (25) which is so supported as to move in the same direction as the central axis line with respect to the second frame (23);
a third driving unit (26) which moves the second running body (25) back and forth in the same direction as the central axis line with respect to the second frame (23) whereby the third driving unit (26) is designed to move the second running body (25) toward metal molds (11a) with respect to the second frame (23), and to move the second running body (25) to an injection unit side with respect to the second frame (23),
an up-down frame (27) which is so supported as to move in an up-down direction with respect to the second running body (25) ;
a holding unit which is attached to a lower portion of the up-down frame (27) via a posture revolving unit (31), and which holds a resin molded product molded by the resin molding machine (1), wherein the posture revolving unit (31) is designed to be activated at the position to control a posture of the holding unit, and
a fourth driving unit (28) which moves the up-down frame (27) in the up-down direction with respect to the second running body (25), whereby the fourth driving unit (28) is designed to lower the up-down frame (27) so that the holding unit faces the metal molds (11a) opened and holds a resin molded product, and to lift the up-down frame (27) up to separate the holding unit holding the resin molded product from between the metal molds (11a) opened and to make the holding unit (29) to be high enough to get over the first frame (19) before the second frame (23) is moved to a retreat position with respect to the first running body (21), and to position the holding unit (29) at a release position near a side of the injection unit.

2. The apparatus (17) for removing resin molded product according to claim 1, **characterized in that**
the third driving unit (26) is designed to move and control the second running body (25) in synchronization with the movement of the second frame (23) with respect to the first running body (21), and to move the second frame (23) at a speed twice as fast with respect to the direction of the central axis line of the resin molding machine (1).

3. A method for removing resin molded product using an apparatus (17) for removing resin molded product according to claim 1 or 2, **characterized by** comprising the steps of;
moving the first running body (21) to an operation side or anti-operation side of a resin molding machine (1) with respect to the first frame (19) by driving and controlling the first driving unit (22), and letting a second frame (23), where a second running body (25) is moved toward metal molds (11a) with respect to the first running body (21) by driving and controlling the third driving unit (26), wait after moving the second frame (23) to a metal mold-side forward position in the apparatus for removing resin molded product by driving and controlling the third driving unit (26) ;
lowering the up-down frame (27) by driving and controlling the fourth driving unit (28) on the basis of a mold-open completion signal output from the resin molding machine (1), and letting the holding unit (29) face the metal molds (11a) opened and hold a resin molded product;
lifting the up-down frame (27) up to be high enough to get over the first frame (19) by driving and controlling the fourth driving unit (28) after the resin molded product is held by the holding unit (29) to separate the holding unit (29) from between the metal molds (11a) opened, and moving the second frame (23) to a retreat position with respect to the first running body (21) by driving and controlling the second driving unit (24);
moving the first running body (21) to a side opposite to the side of the resin molding machine (1) with respect to the first frame (19) by driving and controlling the first driving unit (22), and activating the posture revolving unit (31) at the position to control a posture of the holding unit (29); and
moving the second running body (25) to an injection unit side by making the holding unit (29) to get over the first frame (19) with respect to the second frame (23) by driving and controlling the third driving unit 26 in such a way that the holding unit (29) is positioned at a release position near a side of the injection unit, and canceling the holding of the resin molded product to take out the resin molded product.

4. The method for removing resin molded product according to claim 3, **characterized in that**
at a time when the second running body (25) is moved to a metal-mold side or the injection unit side, the second running body (25) is moved in a direction of movement of the second frame (23) with respect to the second frame (23) by driving and controlling the third driving unit (26) as the second frame (23) is moved in a corresponding direction with respect to the first running body (21) by driving and controlling the second driving unit (24), and the holding unit (29) is moved at a speed twice as fast.

## Patentansprüche

1. Vorrichtung (17) zum Entnehmen eines harzgeformten Produkts, die umfasst:
einen ersten Rahmen (19), der zu einer Mittelachsenlinie einer Harzformmaschine (1) senkrecht ist, der lang genug ist, damit Endabschnitte jeweils eine Betriebsseite und eine Antibetriebsseite der Harzformmaschine (1) erreichen, und der an einer festen Platte (5) befestigt ist;
einen ersten Laufkörper (21), der so abgestützt ist, dass er sich am ersten Rahmen (19) in einer zur Mittelachsenlinie senkrechten Richtung bewegt;
eine erste Antriebseinheit (22), die den ersten Laufkörper (21) in einer zur Mittelachsenlinie senkrechten Richtung in Bezug auf den ersten Rahmen (19) hin und her bewegt, wobei die erste Antriebseinheit (22) dazu ausgelegt ist, den ersten Laufkörper (21) zur Betriebsseite oder Antibetriebsseite der Harzformmaschine (1) in Bezug auf den ersten Rahmen (19) zu bewegen und den ersten Laufkörper (21) zu einer Seite entgegengesetzt zu der Seite der Harzformmaschine (1) in Bezug auf den ersten Rahmen (19) zu bewegen,
einen zweiten Rahmen (23), der so über dem ersten Rahmen (19) abgestützt ist, dass er sich in derselben Richtung wie die Mittelachsenlinie in Bezug auf den ersten Laufkörper (21) erstreckt und sich in der Richtung bewegt;
eine zweite Antriebseinheit (24), die den zweiten Rahmen (23) in derselben Richtung wie die Mittelachsenlinie in Bezug auf den ersten Laufkörper (21) hin und her bewegt, wobei die zweite Antriebseinheit (24) dazu ausgelegt ist, den zweiten Rahmen (23) in eine Metallformseiten-Vorwärtsposition in Bezug auf den ersten Laufkörper (21) zu bewegen,
einen zweiten Laufkörper (25), der so abgestützt ist, dass er sich in derselben Richtung wie die Mittelachsenlinie in Bezug auf den zweiten Rahmen (23) bewegt;
eine dritte Antriebseinheit (26), die den zweiten Laufkörper (25) in derselben Richtung wie die Mittelachsenlinie in Bezug auf den zweiten Rahmen (23) hin und her bewegt, wobei die dritte Antriebseinheit (26) dazu ausgelegt ist, den zweiten Laufkörper (25) in Richtung von Metallformen (11 a) in Bezug auf den zweiten Rahmen (23) zu bewegen und den zweiten Laufkörper (25) zu einer Einspritzeinheitsseite in Bezug auf den zweiten Rahmen (23) zu bewegen,
einen Aufwärts-Abwärts-Rahmen (27), der so abgestützt ist, dass er sich in einer Aufwärts-Abwärts-Richtung in Bezug auf den zweiten Laufkörper (25) bewegt;
eine Halteeinheit, die an einem unteren Abschnitt des Aufwärts-Abwärts-Rahmens (27) über eine Stellungsdreheinheit (31) befestigt ist, und die ein harzgeformtes Produkt hält, das durch die Harzformmaschine (1) geformt wird, wobei die Stellungsdreheinheit (31) so ausgelegt ist, dass sie in der Position aktiviert wird, um eine Stellung der Halteeinheit zu steuern, und
eine vierte Antriebseinheit (28), die den Aufwärts-Abwärts-Rahmen (27) in der Aufwärts-Abwärts-Richtung in Bezug auf den zweiten Laufkörper (25) bewegt, wobei die vierte Antriebseinheit (28) dazu ausgelegt ist, den Aufwärts-Abwärts-Rahmen (27) abzusenken, so dass die Halteeinheit den geöffneten Metallformen (11a) zugewandt ist und ein harzgeformtes Produkt hält, und den Aufwärts-Abwärts-Rahmen (27) anzuheben, um die Halteeinheit, die das harzgeformte Produkt hält, von zwischen den geöffneten Metallformen (11a) zu trennen, und zu veranlassen, dass die Halteeinheit (29) hoch genug ist, um über den ersten Rahmen (19) zu gelangen, bevor der zweite Rahmen (23) in eine Rückzugsposition in Bezug auf den ersten Laufkörper (21) bewegt wird, und die Halteeinheit (29) in einer Löseposition nahe einer Seite der Einspritzeinheit zu positionieren.

2. Vorrichtung (17) zum Entnehmen eines harzgeformten Produkts nach Anspruch 1, **dadurch gekennzeichnet, dass**
die dritte Antriebseinheit (26) dazu ausgelegt ist, den zweiten Laufkörper (25) synchron mit der Bewegung des zweiten Rahmens (23) in Bezug auf den ersten Laufkörper (21) zu bewegen und zu steuern und den zweiten Rahmen (23) mit einer zweimal so schnellen Geschwindigkeit in Bezug auf die Richtung der Mittelachsenlinie der Harzformmaschine (1) zu bewegen.

3. Verfahren zum Entnehmen eines harzgeformten Produkts unter Verwendung einer Vorrichtung (17) zum Entnehmen eines harzgeformten Produkts nach Anspruch 1 oder 2, **dadurch gekennzeichnet, dass** es die Schritte umfasst:
Bewegen des ersten Laufkörpers (21) zu einer Betriebsseite oder Antibetriebsseite einer Harzformmaschine (1) in Bezug auf den ersten Rahmen (19) durch Antreiben und Steuern der ersten Antriebseinheit (22) und Wartenlassen eines zweiten Rahmens (23), wobei ein zweiter Laufkörper (25) in Richtung von Metallformen (11a) in Bezug auf den ersten Laufkörper (21) durch Antreiben und Steuern der dritten Antriebseinheit (26) bewegt wird, nach dem Bewegen des zweiten Rahmens (23) zu einer Metallformseiten-Vorwärtsposition in der Vorrichtung zum Entnehmen des harzgeformten Produkts durch Antreiben und Steuern der dritten Antriebseinheit (26);
Absenken des Aufwärts-Abwärts-Rahmens (27) durch Antreiben und Steuern der vierten Antriebseinheit (28) auf der Basis eines Formöffnungsvollendungssignals, das von der Harzformmaschine (1) ausgegeben wird, und Veranlassen, dass die Halteeinheit (29) den geöffneten Metallformen (11a) zugewandt ist und ein harzgeformtes Produkt hält;
Anheben des Aufwärts-Abwärts-Rahmens (27), damit er hoch genug ist, um über den ersten Rahmen (19) zu gelangen, durch Antreiben und Steuern der vierten Antriebseinheit (28), nachdem das harzgeformte Produkt durch die Halteeinheit (29) gehalten wird, um die Halteeinheit (29) von zwischen den geöffneten Metallformen (11a) zu trennen, und Bewegen des zweiten Rahmens (23) in eine Rückzugsposition in Bezug auf den ersten Laufkörper (21) durch Antreiben und Steuern der zweiten Antriebseinheit (24);
Bewegen des ersten Laufkörpers (21) zu einer Seite entgegengesetzt zur Seite der Harzformmaschine (1) in Bezug auf den ersten Rahmen (19) durch Antreiben und Steuern der ersten Antriebseinheit (22) und Aktivieren der Stellungsdreheinheit (31) in der Position, um eine Stellung der Halteeinheit (29) zu steuern; und
Bewegen des zweiten Laufkörpers (25) zu einer Einspritzeinheitsseite durch Veranlassen, dass die Halteeinheit (29) über den ersten Rahmen (19) in Bezug auf den zweiten Rahmen (23) gelangt, durch Antreiben und Steuern der dritten Antriebseinheit 26 in einer solchen Weise, dass die Halteeinheit (29) in einer Löseposition nahe einer Seite der Einspritzeinheit positioniert wird, und Aufheben des Haltens des harzgeformten Produkts, um das harzgeformte Produkt zu entnehmen.

4. Verfahren zum Entnehmen eines harzgeformten Produkts nach Anspruch 3, **dadurch gekennzeichnet, dass**
zu einer Zeit, wenn der zweite Laufkörper (25) zu einer Metallformseite oder zur Einspritzeinheitsseite bewegt wird, der zweite Laufkörper (25) in einer Bewegungsrichtung des zweiten Rahmens (23) in Bezug auf den zweiten Rahmen (23) durch Antreiben und Steuern der dritten Antriebseinheit (26) bewegt wird, wenn der zweite Rahmen (23) in einer entsprechenden Richtung in Bezug auf den ersten Laufkörper (21) durch Antreiben und Steuern der zweiten Antriebseinheit (24) bewegt wird, und die Halteeinheit (29) mit einer zweimal so schnellen Geschwindigkeit bewegt wird.

## Revendications

1. Appareil (17), destiné à démouler un produit moulé en résine, comprenant :
un premier bâti (19), qui est perpendiculaire à une ligne médiane d'une machine de moulage de résine (1), qui est suffisamment longue pour que des parties d'extrémité atteignent chacune un côté de fonctionnement et un côté de non-fonctionnement de la machine de moulage de résine (1) et qui est fixé sur un plateau fixe (5) ;
un premier corps mobile (21), qui est supporté de façon à se déplacer sur le premier bâti (19), dans une direction perpendiculaire à la ligne médiane ;
une première unité d'entraînement (22), qui déplace le premier corps mobile (21) vers l'arrière et vers l'avant dans une direction perpendiculaire à la ligne médiane, par rapport au premier bâti (19), la première unité d'entraînement (22) étant conçue pour déplacer le premier corps mobile (21) vers le côté de fonctionnement ou de non-fonctionnement de la machine de moulage de résine (1), par rapport par rapport au premier bâti (19) et pour déplacer le premier corps mobile (21) vers un côté opposé au côté de la machine de moulage de résine (1), par rapport au premier bâti (19),
un second bâti (23), qui est supporté au-dessus du premier bâti (19), de façon à s'étendre dans la même direction que la ligne médiane, par rapport au premier corps mobile (21) et à se déplacer dans la direction ;
une deuxième unité d'entraînement (24), qui déplace le second bâti (23) vers l'arrière et vers l'avant, dans la même direction que la ligne médiane, par rapport au premier corps mobile (21), la deuxième unité d'entraînement (24) étant conçue pour déplacer le second bâti (23) vers une position avant du côté du moule en métal, par rapport au premier corps mobile (21) ;
un second corps mobile (25), qui est supporté de façon à se déplacer dans la même direction que la ligne médiane, par rapport au second bâti (23) ;
une troisième unité d'entraînement (26), qui déplace le second corps mobile (25) vers l'arrière et vers l'avant, dans la même direction que la ligne médiane, par rapport au second bâti (23), la troisième unité d'entraînement (26) étant conçue pour déplacer le second corps mobile (25) vers des moules en métal (11a), par rapport au second bâti (23) et pour déplacer le second corps mobile (25) vers un côté de l'unité d'injection, par rapport au second bâti (23) ;
un bâti vertical (27), qui est supporté de façon à se déplacer vers le haut et vers le bas, par rapport au second corps mobile (25) ;
une unité de maintien, qui est fixée à une partie inférieure du bâti vertical (27) par l'intermédiaire d'une unité de pivotement de position (31) et qui maintient un produit moulé en résine, moulé par la machine de moulage de résine (1), dans lequel l'unité de pivotement de position (31) est conçue pour être activée dans la position, pour commander une position de l'unité de maintien et
une quatrième unité d'entraînement (28), qui déplace le bâti vertical (27) vers le haut et vers le bas, par rapport au second corps mobile (25), la quatrième unité d'entraînement (28) étant conçue pour abaisser le bâti vertical (27), de sorte que l'unité de maintien fait face aux moules en métal (11a) ouverts et maintient un produit moulé en résine et pour soulever le bâti vertical (27) vers le haut, pour séparer l'unité de maintien qui maintient le produit moulé en résine d'entre les moules en métal (11a) ouverts et pour faire en sorte que l'unité de maintien (29) soit suffisamment haute pour passer par-dessus le premier bâti (19) avant que le second bâti (23) soit déplacé vers une position de retraitement, par rapport au premier corps mobile (21) et pour positionner l'unité de maintien (29) sur une position de desserrage, près d'un côté de l'unité d'injection.

2. Appareil (17), destiné à démouler un produit moulé en résine selon la revendication 1, **caractérisé en ce que**
la troisième unité d'entraînement (26) est conçue pour déplacer et commander le second corps mobile (25) en synchronisation avec le mouvement du second bâti (23), par rapport au premier corps mobile (21) et pour déplacer le second bâti (23) à une vitesse deux fois plus rapide, par rapport à la direction de la ligne médiane de la machine de moulage de résine (1).

3. Procédé de démoulage d'un produit moulé en résine, utilisant un appareil (17), destiné à démouler un produit moulé en résine, selon la revendication 1 ou 2, **caractérisé en ce qu'**il comprend les étapes consistant à :
déplacer le premier corps mobile (21) vers un côté de fonctionnement ou un côté de non-fonctionnement d'une machine de moulage de résine (1), par rapport au premier bâti (19), en entraînant et commandant la première unité d'entraînement (22) et en laissant un second bâti (23), où un second corps mobile (25) est déplacé vers des moules en métal (11a), par rapport au premier corps mobile (21), en entraînant et en commandant la troisième unité d'entraînement (26), attendre, après le déplacement du second bâti (23) vers une position avant du côté du moule en métal dans l'appareil, pour démouler le produit moulé en résine en entraînant et en commandant la troisième unité d'entraînement (26) ;
abaisser le bâti vertical (27) en entraînant et en commandant la quatrième unité d'entraînement (28) sur la base de l'émission d'un signal d'achèvement d'ouverture de moule de la part de la machine de moulage de résine (1) et laisser l'unité de maintien (29) faire face aux moules en métal (11a) ouverts et retenir un produit moulé en résine ;
soulever le bâti vertical (27) vers le haut, pour qu'il soit suffisamment haut pour passer par-dessus le premier bâti (19), en entraînant et en commandant la quatrième unité d'entraînement (28), après que le produit moulé en résine aura été maintenu par l'unité de maintien (29), pour séparer l'unité de maintien (29) d'entre les moules en métal (11a) ouverts et déplacer le second bâti (23) vers une position de retraitement, par rapport au premier corps mobile (21), en entraînant et en commandant la deuxième unité d'entraînement (24) ;
déplacer le premier corps mobile (21) vers un côté opposé au côté de la machine de moulage de résine (1), par rapport au premier bâti (19), en entraînant et en commandant la première unité d'entraînement (22) et activer l'unité de pivotement de position (31) dans la position, pour commander une position de l'unité de maintien (29) et
déplacer le second corps mobile (25) vers un côté de l'unité d'injection, en faisant en sorte que l'unité de maintien (29) passe par-dessus le premier bâti (19), par rapport au second bâti (23), en entraînant et en commandant la troisième unité d'entraînement 26, d'une manière telle que l'unité de maintien (29) est positionnée dans une position de desserrage, près d'un côté de l'unité d'injection et annuler le maintien du produit moulé en résine, pour sortir le produit moulé en résine.

4. Procédé de démoulage d'un produit moulé en résine selon la revendication 3, **caractérisé en ce**
**qu'**au moment où le second corps mobile (25) est déplacé vers un côté du moule en métal ou le côté de l'unité d'injection, le second corps mobile (25) est déplacé dans une direction de déplacement du second bâti (23), par rapport au second bâti (23), en entraînant et en commandant la troisième unité d'entraînement (26), lorsque le second bâti (23) est déplacé dans une direction correspondante, par rapport au premier corps mobile (21), en entraînant et en commandant la deuxième unité d'entraînement (24) et l'unité de maintien (29) est déplacée à une vitesse deux fois plus rapide.
